# EUROPÄISCHE PATENTANMELDUNG

(11) **EP 0 778 251 A1**
(43) Veröffentlichungstag der Anmeldung: **11.06.1997**
(21) Anmeldenummer: 95119069.3
(22) Anmeldetag: 04.12.1995
(51) Int. Cl.: C04B 41/51, F27D 23/04, F27B 14/10

(54) **Korrosionsschutzeinrichtung für Körper aus Graphit oder Kohlenstoff**

(71) Anmelder: C. Conradty Mechanical & Electrical GmbH, 90552 Röthenbach/Pegnitz (DE)
(72) Erfinder: Bieg, Hartmut, D-90552 Röthenbach/Pegnitz (DE); Bojilov, Adrian, D-90552 Röthenbach/Pegnitz (DE); Kuttesch, Andreas, D-90552 Röthenbach/Pegnitz (DE); Zaprianov, Anquel, D-90552 Röthenbach/Pegnitz (DE)
(74) Vertreter: Kern, Wolfgang, Dipl.-Ing.

(57) **Zusammenfassung**

Die Erfindung betrifft eine Korrosionsschutzeinrichtung zur Erhöhung der Lebensdauer für Körper, die wenigstens teilweise aus Graphit oder Kohlenstoff bestehen, insbesondere Rohre, Wellen, Rotoren und Schaufelräder, und zum Begasen, Rühren und Reinigen von Metallschmelzen und in diesem Zusammenhang zum Einleiten und Verteilen von Gasen in Metallschmelzen dienen. Zur Erhöhung der Lebensdauer derartiger Kohlenstoffkörper unter extremen Druck- und Temperaturbedingungen wird vorgeschlagen, daß die Oberfläche des Körpers mit einem metallischen Schutzüberzug versehen ist, der durch ein- oder mehrmaliges Auftragen und Bearbeiten der Materialien mit einem elektrischen Lichtbogen hergestellt ist, und daß der metallische Schutzüberzug dicht ist, eine feindisperse Struktur aufweist und aus einem hochschmelzenden Stoff oder Stoffgemisch besteht.

## Beschreibung

Die Erfindung betrifft eine Korrosionsschutzeinrichtung für Körper, die wenigstens teilweise aus Graphit oder Kohlenstoff bestehen, gemäß dem Oberbegriff des Anspruchs 1.

Körper aus Graphit oder Kohlenstoff, die zum Rühren, Reinigen, Begasen und dgl. von mehr oder weniger zähflüssigen, aggressiven Medien Verwendung finden, sind in vielfältigen Ausführungsformen bekannt, so beispielsweise aus der EP-A-O 183 402 und der US-A-3 792 848, um nur einige Beispiele aus der großen Zahl solcher Körper, die als Rohre, Wellen, Rotoren, Impeller, Schaufelräder, Tiegel und dgl. eingesetzt werden, zu nennen. In den Fällen, in denen der Einsatz in aggressiven Medien, insbesondere Metallschmelzen, erfolgt, müssen für derartige Körper Materialien benutzt werden, die gegen diese Stoffe beständig sind, wobei oftmals noch erschwerend hohe Temperaturen und Druckbelastungen hinzutreten, unter denen die Verwendung dieser Körper aus Graphit oder Kohlenstoffe erfolgt.

Es hat sich nun gezeigt, daß in den Fällen, in denen solche Körper vollständig oder teilweise aus Graphit oder Kohlenstoff bestehen und zum Begasen von Metallschmelzen verwendet werden, besondere Maßnahmen zur Korrosionsverringerung bzw. gegen zu starken und schnellen Verschleiß getroffen werden müssen, um die Lebensdauer derartiger Kohlenstoffkörper unter solchen extremen Bedingungen erheblich zu steigern.

Hierzu leistet die Erfindung einen wesentlichen Beitrag, indem sie vorschlägt, daß die Oberfläche des Körpers mit einem metallischen Schutzüberzug versehen ist, der durch ein- oder mehrmaliges Auftragen und Bearbeiten der Materialien mit einem elektrischen Lichtbogen hergestellt ist, und daß der metallische Schutzüberzug dicht ist, eine feindisperse Struktur aufweist und aus einem hochschmelzenden Stoff oder Stoffgemisch besteht.

In den Fällen, in denen der Körper aus Graphit oder Kohlenstoff, welcher zum Begasen einer Metallschmelze benutzt wird, aus einer Hohlwelle mit einem Rotor besteht, der an dem in die Metallschmelze eingetauchten Wellenende befestigt ist und mit im wesentlichen radial gerichteten Flügeln oder Schaufeln versehen ist, wird er durch diese Flügel oder Schaufeln in Teilräume oder Schaufelkanäle unterteilt, die von der Metallschmelze und dem in dieser dispgergierten Gas, das durch die Hohlwelle dem Rotor zugeführt wird, vom Rotorenzentrum bzw. Hohlwellenzentrum aus zum Rand des rotierenden Körpers aus Graphit oder Kohlenstoff durchströmt werden.

In diesen Fällen bedeckt der metallische Schutzüberzug die Oberflächen des Rotors, einschließlich Schaufeln und Schaufelkanäle sowie aller weiteren Hohlräume des Rotors und der Hohlwelle, die mit der Metallschmelze in Berührung treten, mindestens teilweise, so daß der verlangte Korrosionsschutz eines solchen Kohlenstoffkörpers aus Graphit oder Kohlenstoff in Form dieser Schutzschichten verläßlich erreicht wird.

Es versteht sich, daß die obigen Oberflächenbeschichtungsmaßnahmen an beliebigen Körpern aus Graphit oder Kohlenstoff durchgeführt werden können, die wenigstens teilweise aus Kohlenstoff bestehen, um diesen mit einem wirksamen Korrosionsschutz bzw. Schutz gegen zu starken Abrieb zu versehen.

Gemäß einer besonders vorteilhalten Ausgestaltung der Erfindung enthält der metallische Schutzüberzug Aluminium oder eine Aluminiumlegierung oder Nickellegierung, und bei der Bearbeitung mit einem elektrischen Lichtbogenofen brennt dieser ununterbrochen zwischen dem bearbeiteten Gegenstand und einer seitlichen Elektrode, wobei die Oberfläche über dem elektrischen Lichtbogen bewegt wird.

Dieser metallische Überzug aus Aluminium, einer Aluminiumlegierung oder einer Nickellegierung kann die Oberflächen des Rotors, einschließlich der Schaufeln und Schaufelkanäle sowie aller weiteren Hohlräume des Rotors in der Hohlwelle, die mit der Metallschmelze in Berührung treten, wenigstens teilweise bedecken.

Gemäß weiterer vorteilhafter Ausgestaltungen ist der Rotor ein Impeller.

Desweiteren kann der Körper aus Graphit oder Kohlenstoff ein Rohr sein, das wenigstens teilweise in die Schmelze eintaucht, wobei das Gas oder Zusätze durch das Rohrinnere eingeleitet werden. Ebenso hat es sich bewährt, den Körper aus Graphit oder Kohlenstoff als Tiegel oder Tiegelaufsatz für das Schmelzen von Metallegierungen auszubilden.

## Patentansprüche

1. Korrosionsschutzeinrichtung für Körper, die wenigstens teilweise aus Graphit oder Kohlenstoff bestehen, insbesondere Rohre, Wellen, Rotoren und Schaufelräder, und zum Begasen, Rühren und Reinigen von Metallschmelzen und in diesem Zusammenhang zum Einleiten und Verteilen von Gasen in Metallschmelzen dienen, **dadurch gekennzeichnet,** daß die Oberfläche des Körpers mit einem metallischen Schutzüberzug versehen ist, der durch ein- oder mehrmaliges Auftragen und Bearbeiten der Materialien mit einem elektrischen Lichtbogen hergestellt ist, und daß der metallische Schutzüberzug dicht ist, eine feindisperse Struktur aufweist und aus einem hochschmelzenden Stoff oder Stoffgemisch besteht.

2. Korrosionsschutzeinrichtung nach Anspruch 1, **dadurch gekennzeichnet**, daß der metallische Schutzüberzug Aluminium enthält und bei der Bearbeitung mit einem elektrischen Lichtbogen dieser ununterbrochen zwischen dem bearbeiteten Gegenstand und einer seitlichen Elektrode brennt, wobei die Oberfläche über dem elektrischen Lichtbogen bewegt wird.

3. Korrosionsschutzeinrichtung nach Anspruch 1 oder 2, **dadurch gekennzeichnet,** daß der Körper aus Graphit oder Kohlenstoff ein Rohr ist, das mindestens teilweise in die Schmelze eintaucht und das Gas oder Zusätze durch das Rohrinnere eingeleitet werden.

4. Korrosionsschutzeinrichtung nach Anspruch 1 oder 2, **dadurch gekennzeichnet,** daß der Körper aus Graphit oder Kohlenstoff ein Tiegel oder Tiegelaufsatz für das Schmelzen von Metallegierungen ist.

5. Korrosionsschutzeinrichtung nach Anspruch 1 oder 2, **dadurch gekennzeichnet,** daß der Körper aus einer Hohlwelle und einem Rotor besteht, der an dem in die Metallschmelze eingetauchten Wellenende befestigt ist und mit im wesentlichen radial gerichteten Flügeln oder Schaufeln versehen ist, die von der Metallschmelze und dem in dieser dispergierten Gas, das durch die Hohlwelle dem Rotor zuführbar ist, vom Rotorzentrum bzw. Hohlwellenzentrum aus zum Rand des Rotationskörpers durchströmbar sind.

6. Korrosionseinrichtung nach Anspruch 5, **dadurch gekennzeichnet,** daß der metallische Schutzüberzug aus Aluminium oder einer Aluminiumlegierung besteht, die die Oberflächen des Rotors, einschließlich der Schaufeln und Schaufelkanäle sowie aller weiteren Hohlräume des Rotors und der Hohlwelle, die mit der Metallschmelze in Berührung treten, wenigstens teilweise bedeckt.

7. Korrosionseinrichtung nach Anspruch 5, **dadurch gekennzeichnet,** daß der metallische Schutzüberzug aus Nickel oder einer Nickellegierung besteht, die die Oberflächen des Rotors, einschließlich der Schaufeln und Schaufelkanäle sowie aller weiteren Hohlräume des Rotors und der Hohlwelle, die mit der Metallschmelze in Berührung treten, wenigstens teilweise bedeckt.

8. Korrosionseinrichtung nach Anspruch 7, **dadurch gekennzeichnet,** daß der Nickelgehalt 50 bis 80 % beträgt und der Rest überwiegend Aluminium ist.

9. Korrosionsschutzeinrichtung nach einem der Ansprüche 5 bis 8, **dadurch gekennzeichnet,** daß der Rotor ein Impeller ist.
